(19) Europäisches Patentamt

European Patent Office

Office européen des brevets

(11) **EP 2 241 783 B1**

(12) **FASCICULE DE BREVET EUROPEEN**

(45) Date de publication et mention de la délivrance du brevet:
**30.05.2012 Bulletin 2012/22**

(51) Int Cl.:
***F16H 3/10*** *(2006.01)*    ***F02C 7/275*** *(2006.01)*

(21) Numéro de dépôt: **10001026.3**

(22) Date de dépôt: **02.02.2010**

(54) **Installation motrice et procédé d'entrainement d'un système mécanique via ladite installation motrice**

Triebsanordnung und Verfahren zum Betrieb eines Mechanischen Systems über diese Triebsanordnung

Drivetrain and method for driving a mechanical system through this drivetrain

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.02.2009 FR 0900810**

(43) Date de publication de la demande:
**20.10.2010 Bulletin 2010/42**

(73) Titulaire: **EUROCOPTER**
**13725 Marignane Cédex (FR)**

(72) Inventeur: **Vialle, Michel**
**13100 Aix en Provence (FR)**

(74) Mandataire: **Pouillot, Laurent Pierre Paul**
**GPI & Associés**
**1330, rue Guillibert de la Lauzière**
**EuroParc de Pichaury, Bât B2.9 - 1er Et.**
**13856 Aix-en-Provence Cedex 3 (FR)**

(56) Documents cités:
| | |
|---|---|
| **WO-A2-2007/086906** | **DE-C- 763 176** |
| **FR-A1- 2 670 553** | **GB-A- 2 122 285** |
| **GB-A- 2 429 500** | **US-A- 3 541 885** |
| **US-A- 4 542 722** | **US-A1- 2008 081 733** |

**Description**

La présente invention concerne une installation motrice, et un procédé d'entraînement d'un système mécanique via ladite Installation motrice.

Par exemple, l'installation motrice est une installation motrice de giravion, tel qu'un hélicoptère. L'installation motrice est alors munie d'au moins un moteur comportant un arbre de sortie pour mettre en mouvement une boîte de transmission principale afin d'entraîner en rotation le rotor principal de propulsion et de sustentation de l'hélicoptère.

Afin d'entraîner le rotor principal de sustentation et de propulsion d'un giravion tel qu'un hélicoptère via une boîte de transmission principale de puissance, on connaît une première solution visant à mettre en oeuvre un turbomoteur dénommé « turbomoteur à turbine libre ».

Un turbomoteur à turbine libre comporte un générateur de gaz comportant successivement au moins un compresseur, une chambre de combustion et au moins une turbine de détente, le compresseur étant lié mécaniquement à la turbine de détente par un arbre principal.

Il est concevable d'équiper le compresseur d'une pluralité d'étages de compression, axiaux et/ou centrifuges, et la turbine de détente d'une pluralité d'étages de détente.

A la suite du générateur de gaz, on agence une turbine libre de travail solidaire de l'arbre de sortie du turbomoteur. L'arbre principal du générateur de gaz et l'arbre de sortie sont alors distincts. Par suite, un turbomoteur à turbine libre est parfois dénommé « turbomoteur à deux arbres ».

En fonctionnement, le turbomoteur aspire l'air ambiant. Cet air est ensuite comprimé avant d'être dirigé dans la chambre de combustion.

Un combustible sous pression est injecté dans la chambre de combustion puis brûlé conjointement avec l'air comprimé.

Les gaz résultant de la combustion sont alors conduits vers la turbine de détente afin d'y être détendus. Ces gaz entraînent alors la rotation de cette turbine de détente autour de son axe de rotation.

On note que la turbine de détente entraîne de fait en rotation le compresseur du générateur de gaz via l'arbre principal.

Les gaz provenant de la turbine de détente du générateur de gaz mettent alors en rotation la turbine libre de travail qui entraîne l'arbre de sortie du turbomoteur, et par suite la boîte de transmission principale de puissance.

Pour démarrer un turbomoteur à turbine libre, on utilise alors un démarreur qui met en rotation l'arbre principal de ce turbomoteur.

L'arbre principal n'étant pas solidaire de l'arbre de sortie sur les « turbomoteurs à deux arbres », le démarreur peut être optimisé, ce démarreur ne devant pas nécessairement être surdimensionné.

Par ailleurs et en référence au document WO2007/086906, qui représente l'état de la technique le plus proche, il convient d'agencer une roue libre sur l'arbre de sortie pour permettre au giravion muni d'un turbomoteur d'effectuer une autorotation.

Ainsi, ce document présente un turbomoteur apte à entraîner une boîte de transmission particulière munie d'une boîte de transmission à vitesse variable et d'une boîte de transmission principale, la boîte de transmission à vitesse variable permettant au turbomoteur d'entraîner un rotor à deux vitesses différentes.

Une roue libre est alors agencée sur l'arbre de sortie du turbomoteur, entre le corps de ce turbomoteur et la boîte de transmission à vitesse variable.

Ainsi, en cas de panne du turbomoteur, la roue libre garantit qu'un blocage de la turbine libre du turbomoteur n'engendrera pas un blocage de la rotation du rotor principal.

On note que ce document WO2007/086906 met en oeuvre des roues libres classiques.

Une roue libre classique est usuellement munie d'une portion entraînante et d'une portion entraînable, au moins une bille étant agencée entre une rampe inclinée de la portion entraînante et une surface circulaire de la portion entraînable. Ainsi, lorsque la portion entraînable tourne plus vite que la portion entraînante, ladite bille se trouve au pied de la rampe inclinée ce qui désolidarise les portions entraînable et entraînante.

A l'inverse, lorsque la portion entraînante tourne plus vite que la portion entraînable, la bille se dirige vers le haut de la rampe inclinée et se retrouve de fait coincée entre la portion entraînante et la portion entraînable. Par suite, la portion entraînante met en rotation la portion entraînable via ladite bille. Les portions entraînable et entraînante sont alors solidaires en rotation.

Outre les roues libres classiques mises en oeuvre dans le document WO2007/086906, on connaît des roues libres aptes à être déconnectées qui ne sont absolument pas assimilables à une simple roue libre classique. En effet, une roue libre apte à être déconnectée fonctionne selon deux modes de connexion distincts :

- un mode déconnecté, la portion entraînante de la roue libre ne pouvant en aucun cas mettre en mouvement sa portion entraînable,

- un mode roue libre, la portion entraînante de la roue libre mettant en rotation sa portion entraînable dès que la première vitesse de rotation de la portion entraînante devient supérieure à la deuxième vitesse de rotation de la portion entraînable, alors qu'à contrario ladite portion entraînante de la roue libre n'est pas apte à mettre en rotation ladite portion entraînable lorsque la première vitesse de rotation de la portion entraînante est inférieure à la deuxième vitesse de rotation de la portion entraînable.

On se rapportera à la littérature pour trouver des exemples de réalisation d'une roue libre apte à être déconnectée.

Par exemple, selon un premier mode de réalisation décrit par le document FR2670553, on remplace les billes d'une roue libre classique par des galets agencés dans une cage que l'on peut déplacer le long de l'axe longitudinal de la roue libre. Ainsi, en mode déconnecté, dans une première position, les galets ne se trouvent pas entre les portions entraînante et entraînable et ne peuvent en aucun cas transmettre le mouvement de la portion entraînante à la portion entraînable. Par contre, en mode roue libre, les galets se trouvent dans une deuxième position de manière à être agencés entre les portions entraînante et entraînable pour transmettre le mouvement de la portion entraînante à la portion entraînable le cas échéant.

En opposition aux roues libres classiques, on nomme **« roue libre débrayable »** par commodité dans la suite du texte de telles roues libres aptes à être déconnectées.

Il est à noter qu'une roue libre débrayable est parfois appelée « roue libre décrabotable » par l'homme du métier. En effet, la succession de rampes sur la portion entraînante fait apparaître des sortes de crabots entre deux rampes adjacentes ce qui justifie l'expression employée.

Outre les turbomoteurs à turbine libre, il est concevable d'utiliser un turbomoteur dénommé « turbomoteur à turbine liée».

Un turbomoteur à turbine liée est muni d'un générateur de gaz, du type présente précédemment.

En fonctionnement, le turbomoteur aspire l'air ambiant. Cet air est ensuite comprimé avant d'être dirigé dans la chambre de combustion.

Un combustible sous pression est injecté dans la chambre de combustion puis brulé conjointement avec l'air comprimé.

Les gaz résultant de la combustion sont alors conduits vers la turbine de détente afin d'y être détendus. Ces gaz entraînent alors la rotation de cette turbine de détente autour de son axe de rotation.

On note que la turbine de détente entraîne de fait en rotation le compresseur du générateur de gaz via l'arbre principal.

De plus, l'arbre principal ne sert pas uniquement à lier le compresseur à la turbine de détente. Pour les turbomoteurs à turbine liée, cet arbre principal constitue aussi l'arbre de sortie du turbomoteur, apte à mettre en mouvement une boîte de transmission principale d'hélicoptère par exemple.

Ainsi, les turbomoteurs à turbines liées sont parfois appelés « turbomoteur à un arbre ».

Pour démarrer le turbomoteur à turbine liée, on utilise un démarreur externe qui va mettre en rotation le compresseur. Néanmoins, contrairement à un turbomoteur à turbine libre, l'arbre principal et l'arbre de sortie constituant un unique arbre, le démarreur va de fait entraîner la rotation de l'arbre de sortie et donc du rotor principal.

Par conséquent, le démarreur doit être surdimensionné pour remplir sa fonction ce qui induit des coûts, un encombrement ou encore une consommation de carburant déraisonnables et une masse excessive.

Cet inconvénient explique notamment que les turbomoteurs à turbine liée sont rarement utilisés sur un giravion, les objectifs de masse nominale étant notamment récurrents pour ce type d'aéronef.

Il en va de même pour les moteurs à pistons, de type alternatif ou rotatif, qui présentent le même défaut.

Pour contourner cette difficulté, il est courant d'installer un embrayage, de type centrifuge à friction, sur l'arbre de sortie. Une partie menante de l'embrayage est alors solidaire de l'arbre de sortie alors qu'une partie menée de l'embrayage est solidarisée à un arbre d'entraînement de la boîte de transmission.

Au démarrage, l'embrayage est débrayé. Ainsi, l'arbre de sortie n'est plus solidaire du rotor principal ce qui permet d'optimiser les performances du démarreur.

Par contre, une fois le moteur démarré, un turbomoteur à turbine liée ou un moteur à pistons, on embraye l'embrayage afin que l'arbre de sortie puisse entraîner le rotor principal via la boîte de transmission principale.

Bien qu'efficace, ce dispositif présente des inconvénients. Après le démarrage, l'embrayage va subir des couples importants ce qui risque de faire glisser sa partie menante par rapport à sa partie menée. Il en résulte de fait une usure non négligeable du dispositif.

De même, au cours du vol, le risque de glissement demeure du fait de la présence de fluctuations de couple importantes.

Par suite, les embrayages sont fortement surdimensionnés pour éviter tout risque de glissement, et font l'objet d'actions de maintenances fréquentes et onéreuses.

La présente invention se situe alors dans le domaine technique restreint des installations motrices mettant en oeuvre un « moteur à un arbre », un turbomoteur à turbine liée ou à pistons, en ayant pour objet de proposer une installation motrice permettant de s'affranchir des limitations mentionnées ci-dessus. Plus précisément, l'invention a pour objet une Installation motrice pourvue d'un moteur comportant un arbre de sortie obligatoirement mis en rotation au démarrage dudit moteur, cette installation motrice ne nécessitant ni un démarreur surdimensionné ni un embrayage surdimensionné.

Selon l'invention, une installation motrice est munie d'un arbre d'entraînement et d'au moins un moteur comportant un arbre de sortie obligatoirement mis en rotation lors du démarrage du moteur, l'arbre d'entraînement étant apte à mettre en mouvement un système mécanique du type boîte de transmission principale d'un giravion. Cette installation motrice est remarquable en ce qu'elle comporte un organe de liaison pourvu d'un embrayage et d'une roue libre débrayable pour lier mécaniquement l'arbre de sortie à l'arbre d'entraînement.

Il est à noter qu'une roue libre débrayable est classiquement munie d'une portion entraînante et d'une portion entraînable, à savoir une portion apte à être entraînée par la portion entraînante.

Comme indiqué précédemment, une telle roue libre débrayable n'est absolument pas assimilable à une simple roue libre. En outre, on constate que l'état de la technique connu n'envisage pas l'emploi d'une telle roue libre débrayable pour résoudre le problème posé.

Par exemple le document GB 2122285 décrit une boîte de vitesse reliant l'arbre de sortie d'un moteur à un arbre d'entraînement. La boîte de vitesse est pourvue de trois arbres principaux en parallèle, et deux moyens de connexions.

Chaque moyen de connexion comporte une roue libre pourvue d'une portion interne et d'une portion externe solidaire du disque d'un embrayage.

De même, le document DE 763170 divulgue l'utilisation d'embrayage.

Enfin le document US 20081081723 divulgue un dispositif muni d'un convertisseur de couple et d'un moyen de connexion mécanique, Ce moyen de connexion mécanique est un embrayage apte à connecter ou déconnecter deux arbres.

Par ailleurs, l'embrayage peut être réalisé de multiples manières sans sortir du cadre de l'invention. Par exemple, l'embrayage peut être un embrayage centrifuge à friction abondamment décrit dans la littérature, par exemple du type mis en oeuvre sur l'hélicoptère connu sous la dénomination commerciale AS361.

En mettant en oeuvre un tel organe de liaison, on verra par la suite qu'il devient inutile de pourvoir une installation motrice, munie d'un turbomoteur à turbine liée ou d'un moteur à pistons de type alternatif ou rotatif, d'un embrayage surdimensionné. De même, l'invention ne nécessite pas la mise oeuvre d'une roue libre dédiée à l'autorotation d'un giravion, par exemple, dans la mesure où la roue libre débrayable remplit aussi cette fonction.

L'invention comporte en outre une ou plusieurs des caractéristiques additionnelles suivantes.

La roue libre débrayable fonctionne indifféremment soit selon un mode déconnecté durant lequel une portion entraînante de la roue libre débrayable ne peut en aucun cas mettre en mouvement une portion entraînable de cette roue libre débrayable, soit selon un mode roue libre durant lequel la portion entraînante met en rotation la portion entraînable dès qu'une première vitesse de rotation de la portion entraînante devient supérieure à une deuxième vitesse de rotation de la portion entraînable alors qu'à contrario la portion entraînante n'est pas apte à mettre en rotation ladite portion entraînable lorsque la première vitesse de rotation est inférieure à la deuxième vitesse de rotation.

Avantageusement, l'organe de liaison est apte à lier mécaniquement l'arbre de sortie à l'arbre d'entraînement soit par l'embrayage, soit par la roue libre débrayable. On ne met alors pas en oeuvre un mode de fonctionnement visant à utiliser en parallèle l'embrayage et la roue libre débrayable de manière à ne pas surdimensionner ledit embrayage.

En outre, l'organe de liaison comporte éventuellement:

- un premier et un deuxième arbres primaires solidarisés à l'embrayage, le premier arbre primaire étant muni d'une première roue dentée primaire pourvue d'un premier nombre de dents et le deuxième arbre primaire étant muni d'une deuxième roue dentée primaire pourvue d'un deuxième nombre de dents,

- un premier et un deuxième arbres secondaires solidarisés à la roue libre débrayable, le premier arbre secondaire étant muni d'une première roue dentée secondaire pourvue d'un troisième nombre de dents en prise avec la première roue dentée primaire, le deuxième arbre secondaire étant muni d'une deuxième roue dentée secondaire pourvue d'un quatrième nombre de dents en prise avec la deuxième roue dentée primaire.

Plus précisément, une partie menante de l'embrayage est solidaire du premier arbre primaire, alors qu'une partie menée de cet embrayage est solidaire du deuxième arbre primaire.

De même, la portion entraînante de la roue libre débrayable est solidaire du premier arbre secondaire, alors que la portion entraînable de la roue libre débrayable est solidaire du deuxième arbre secondaire.

De plus, les premier et deuxième arbres primaires étant disposés sur un même premier axe de rotation, les premier et deuxième arbres secondaires étant disposés sur un même deuxième axe de rotation, les premier et deuxième arbres primaires sont parallèles aux premier et deuxième arbres secondaires pour optimiser le fonctionnement de l'organe de liaison.

Par ailleurs, le premier quotient du troisième nombre de dents par le premier nombre de dents est avantageusement supérieur à une unité, le produit de ce premier quotient par un deuxième quotient du deuxième nombre de dents par le quatrième nombre de dents étant aussi supérieur à une unité.

En outre, l'arbre de sortie est solidaire en rotation de la première roue dentée primaire ou de la première roue dentée secondaire.

De même, l'arbre d'entraînement est solidaire en rotation de la deuxième roue dentée primaire ou de la deuxième roue dentée secondaire.

Enfin, l'installation motrice comporte au moins un moyen de commande de l'embrayage et de la roue libre débrayable. Ce moyen de commande peut être un moyen de commande manuel activable par un pilote ou moyen de commande automatique.

La présente invention a aussi pour objet le procédé mis en oeuvre par l'installation motrice.

Selon l'invention un procédé d'entraînement d'un système mécanique via une installation motrice munie d'un arbre d'entraînement et d'au moins un moteur comportant un arbre des sortie obligatoirement mis en rotation lors du démarrage du moteur, ledit moteur étant un turbomoteur à turbine liée ou un moteur à pistons, l'arbre d'entraînement étant en prise avec le système mécanique pour le mettre en mouvement, l'installation motrice comportant un organe de liaison pourvu d'un embrayage et d'une roue libre débrayable pour lier mécaniquement l'arbre de sortie à l'arbre d'entraînement, est notamment remarquable en ce que :

- durant une phase de démarrage, on débraye l'embrayage et on débraye la roue libre débrayable pour désolidariser l'arbre de sortie de l'arbre d'entraînement.

- durant une phase intermédiaire de fonctionnement, on embraye l'embrayage et on conserve la roue libre débrayée pour solidariser l'arbre de sortie à l'arbre d'entraînement via l'embrayage uniquement, et

- durant une phase de fonctionnement stabilisée, on débraye l'embrayage et on embraye ladite roue libre débrayable pour solidariser ledit arbre de sortie audit arbre d'entraînement via ladite roue libre débrayable.

Par suite, au démarrage, on débraye l'embrayage et on débraye la roue libre débrayable. On note que ces deux opérations sont réalisées simultanément ou successivement, la roue libre débrayable étant débrayée après le débrayage de l'embrayage. L'arbre de sortie n'est pas à même de mettre en mouvement l'arbre d'entraînement, et donc la système mécanique, dans la mesure où l'embrayage est débrayé et la roue libre débrayable débrayée.

Il n'est alors pas nécessaire d'utiliser un démarreur particulièrement puissant.

Le constructeur ayant défini un régime de ralenti minimal dudit moteur de manière usuel, lorsque le moteur atteint son régime minimal de ralenti et développe donc une premier couple au ralenti, on passe de la phase de démarrage à une phase de fonctionnement intermédiaire. On embraye alors l'embrayage et on conserve la roue libre débrayable débrayée.

La partie menante de l'embrayage entraîne en rotation la partie menée de cet embrayage. Dès lors, l'arbre de sortie du moteur entraîne l'arbre d'entraînement du système mécanique via notamment l'embrayage de l'organe de liaison, et non pas par la roue libre débrayable qui reste débrayée.

Le couple étant faible, il n'y a pas de risque d'être confronté à un glissement de l'embrayage.

L'embrayage étant apte à supporter un couple optimal compris entre un premier couple au ralenti et un deuxième couple maximal développés par ledit moteur, lorsque le couple développé par le moteur atteint ledit couple optimal dudit embrayage, on passe de la phase de fonctionnement intermédiaire à une phase de fonctionnement stabilisée. Ainsi, on débraye l'embrayage et on embraye la roue libre débrayable de manière simultanée ou successive, en embrayant la roue libre débrayable après le débrayage de l'embrayage par exemple. L'arbre de sortie du moteur entraîne alors l'arbre d'entraînement du système mécanique via notamment la roue libre débrayable de l'organe de liaison, et non pas par l'embrayage ce qui permet d'éviter tout risque de glissement.

En conséquence, le constructeur dimensionne son embrayage afin d'adapter son couple optimal de fonctionnement sans glissement en fonction du besoin, ce couple optimal étant le plus éloigné possible du deuxième couple maximal tout en restant supérieur au premier couple.

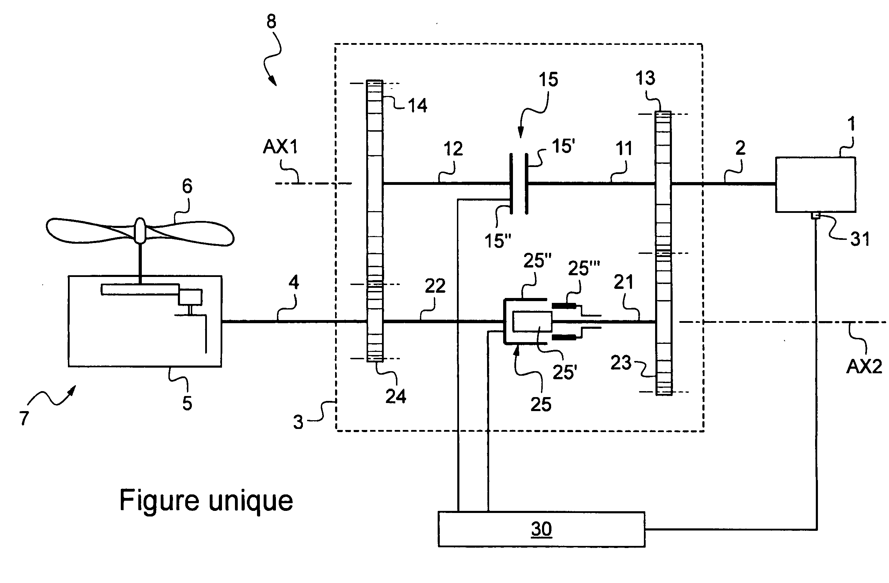

L'invention et ses avantages apparaîtront avec plus de détails dans le cadre de la description qui suit avec un exemple de réalisation donné à titre illustratif en référence à la figure unique annexée.

La figure unique présente une installation motrice 8 apte à mettre en mouvement un système mécanique 7. Ce système mécanique 7 est constitué sur l'exemple représenté d'une boîte de transmission principale 5 d'un giravion et du rotor principal 6 de ce giravion.

Dès lors, l'installation motrice 8 comporte successivement un moteur 1 muni d'un arbre de sortie 2. Le moteur 1 est un moteur de type « moteur à un arbre », par exemple un turbomoteur à turbine liée ou encore un moteur à pistons.

Afin de ne pas devoir implémenter un démarreur exagérément puissant, l'installation motrice comporte un organe de liaison 3 relié d'une part à l'arbre de sortie 2 et, d'autre part à un arbre d'entraînement 4 de l'installation motrice apte à entraîner la boîte de transmission principale 5.

L'organe de liaison 3 a alors pour fonction de lier mécaniquement l'arbre de sortie 2 du moteur 1 à l'arbre d'entraînement 4 dans certaines conditions de fonctionnement du moteur 1, notamment lors des vols du giravion.

Par suite, l'organe de liaison 3 comporte un embrayage 15, muni d'une partie menante 15' et d'une partie menée 15", et une roue libre débrayable 25, pourvue d'une portion entraînante 25' et d'une portion entraînable 25". Il est à noter que la partie menante 15' de l'embrayage 15 entraîne en rotation ladite partie menée 15" lorsque l'embrayage 15 est embrayé.

De même, la roue libre débrayable 25 comporte une portion entraînante 25', une portion entraînable 25", et une pluralité de galets 25''' disposés dans une cage afin de pouvoir être déplacés longitudinalement.

En mode déconnecté, représenté sur la figure unique, les galets sont en retrait des portions entraînante 25' et entraînable 25". De fait, ces portions entraînante 25' et entraînable 25" sont désolidarisées en rotation dans ce mode déconnecté.

En mode roue libre, non représenté, les galets sont déplacés longitudinalement de manière à être disposés entre les portions entraînante 25' et entraînable 25". La portion entraînante 25' de la roue libre débrayable met en rotation la portion entraînable 25" d'une part quand la roue libre est embrayé et, d'autre part dès que la vitesse de rotation de la portion entraînante 25' devient supérieure à la vitesse de rotation de la portion entraînable 25".

On se rapportera à la littérature pour obtenir plus d'informations sur les roues libres débrayables si nécessaire.

Ainsi, au démarrage du moteur 1, l'embrayage 15 est débrayé tandis que la roue libre débrayable est débrayée et donc en mode déconnecté. L'organe de liaison 3 ne lie alors pas l'arbre de sortie 2 à l'arbre d'entraînement 4. Une rotation de l'arbre de sortie 2 lors du démarrage n'induit donc pas une rotation du rotor principal 6 ce qui permet d'utiliser un démarreur ayant des dimensions optimisées.

A contrario, à l'issue de la phase de démarrage, l'organe de liaison 3 lie mécaniquement l'arbre de sortie 2 à l'arbre d'entraînement 4, via l'embrayage 15 lorsque le moteur 1 développe un couple relativement faible et via la roue libre débrayable lorsque le moteur 1 développe un couple relativement important.

A cet effet, l'organe de liaison 3 comporte un premier et un deuxième arbres primaires 11, 12 solidarisés respectivement à la partie menante 15' et à la partie menée 15" de l'embrayage 15.

De même, l'organe de liaison 3 comporte un premier et un deuxième arbres secondaires 21, 22 solidarisés respectivement à la portion entraînante 25' et à la portion entraînable 25" de la roue libre débrayable.

Les premier et deuxième arbres primaires 11, 12 étant disposées sur un même premier axe de rotation AX1, les premier et deuxième arbres secondaires 21, 22 sont disposés sur un même deuxième axe de rotation AX2 parallèle au premier axe de rotation AX1.

Par ailleurs, le premier arbre primaire 11 étant muni d'une première roue dentée primaire 13 pourvue d'un premier nombre de dents P1, le premier arbre secondaire 21 est muni d'une première roue dentée secondaire 23 pourvue d'un troisième nombre de dents R1 en prise avec la première roue dentée primaire 13.

De façon semblable, le deuxième arbre primaire 12 étant muni d'une deuxième roue dentée primaire 14 pourvue d'un deuxième nombre de dents P2, le deuxième arbre secondaire 22 est muni d'une deuxième roue dentée secondaire 24 pourvue d'un quatrième nombre de dents R2 en prise avec la deuxième roue dentée primaire 14.

On détermine alors les premier, deuxième, troisième et quatrième nombres de dents P1, P2, R1, R2 à l'aide d'une part d'un premier quotient Q1 du troisième nombre de dents R1 par le premier nombre de dents P1 et, d'autre part, d'un deuxième quotient Q2 du deuxième nombre de dents P2 par le quatrième nombre de dents R2, soit

$$Q1 = \frac{R1}{P1}$$

$$Q2 = \frac{P2}{R2}$$

Dès lors, les premier et deuxième quotients Q1 et Q2 respectent Idéalement les première et deuxième conditions suivantes :

$$Q1 > 1$$

$$Q1 * Q2 > 1$$

où « * » représente le signe de la multiplication.

En outre, afin de pouvoir être mécaniquement lié à l'arbre d'entraînement 4 par l'organe de liaison 3, l'arbre de sortie 2 est fixé à la première roue dentée primaire 13 pour lui être solidaire en rotation autour du premier axe de rotation AX1. Toutefois, à titre de variante, l'arbre de sortie 2 pourrait être fixé à la première roue dentée secondaire 23 pour lui être solidaire en rotation autour du deuxième axe de rotation AX2.

Par conséquent, l'arbre d'entraînement 4 est fixé à la deuxième roue dentée secondaire 24 pour lui être solidaire en rotation autour du deuxième axe de rotation AX2. Toutefois, à titre de variante, l'arbre d'entraînement pourrait être fixé à la deuxième roue dentée primaire 14 pour lui être solidaire en rotation autour du premier axe de rotation AX1.

Selon le procédé avantageusement mis en oeuvre par l'installation motrice 8, au cours du démarrage on débraye l'embrayage 15 et on débraye la roue libre débrayable 25.

Cette opération peut être réalisée par un moyen de commande manuel contrôlé par le pilote, ou par un moyen de commande 30 automatique relié à l'embrayage 15 et à la roue libre débrayable 25. Selon cette dernière variante, le moyen de commande 30, tel qu'un calculateur, est relié à un capteur 31, de type capteur de couple par exemple, pour déterminer la phase de fonctionnement de l'installation motrice à savoir une phase de démarrage, une phase de fonctionnement intermédiaire à faible couple durant laquelle le moteur développe un faible couple ou une phase de fonctionnement stabilisée à un couple important durant laquelle le moteur développe un couple important.

L'arbre de sortie 2 du moteur 1 met alors en rotation les premiers arbres primaire 11 et secondaire 21 via la première et la troisième roues dentées 13, 23.

L'embrayage 15 étant débrayé et la roue libre débrayable 25 étant débrayée, les deuxièmes arbres primaire 12 et secondaire 22 ne sont pas entraînés en rotation ce qui implique que l'arbre d'entraînement 4, la boîte de transmission principale 5 et le rotor principal 6 demeurent immobiles.

Le constructeur ayant défini un régime de ralenti minimal dudit moteur 1, lorsque le moteur 1 atteint son régime minimal de ralenti et donc un premier couple au ralenti, on entre dans une phase de fonctionnement à faible couple ne nécessitant plus l'emploi d'un démarreur.

On embraye alors, à l'aide du moyen de commande 30, l'embrayage 15 afin que sa partie menante 15' soit en contact avec sa partie menée 15". Le deuxième arbre primaire 12 effectue dès lors un mouvement rotatif et entraîne, via la deuxième et la quatrième roues dentées 14, 24, l'arbre d'entraînement 4 ainsi que la boîte de transmission principale 5 et le rotor principal 6 du système mécanique 7.

De plus, le deuxième arbre secondaire 22 est aussi mis en rotation. Néanmoins, on note les portions entraînante 25' et entraînable 25" de la roue libre débrayable 25 ne sont pas en prises l'une avec l'autre, la roue libre débrayable 25 étant débrayée.

Le couple étant faible, un embrayage 15 de dimensions raisonnables suffit pour fonctionner sans glissement et donc pour supporter un couple optimal compris entre un premier couple au ralenti et un deuxième couple maximal développés par le moteur 1. Le constructeur détermine par exemple l'embrayage à utiliser, et donc ledit couple optimal, en fonction de l'encombrement disponible.

Il en va autrement lorsque le moteur 1 développe un couple important.

Par conséquent, lorsque le couple développé par le moteur atteint ledit couple optimal dudit embrayage, au début d'une phase de fonctionnement stabilisée, on débraye l'embrayage 15 de manière à désolidariser sa partie menante 15' de sa partie menée 15".

Dans le même temps ou successivement, on embraye la roue libre débrayable 25. Il est à noter que, du fait du nombre de dents des divers roues dentées 13, 14, 23, 24, le deuxième arbre secondaire 22 et la portion entraînable 25" associée de la roue libre débrayable 25 tournent plus vite que le premier arbre secondaire 21 et la portion entraînante 25' associée de la roue libre débrayable 25.

Par suite, l'arbre de sortie 2 n'entraîne plus en rotation l'arbre d'entraînement 4 durant une phase transitoire courte.

La vitesse de rotation de l'arbre d'entraînement 4, de la quatrième roue dentée 24, du deuxième arbre secondaire 22 et de la portion entraînable 25" chute et va passer sous la vitesse de rotation de la portion entraînante 25' de la roue libre débrayable 25.

La roue libre débrayable 25 étant débrayée, la portion entraînante 25' de cette roue libre débrayable 25 va de fait mettre en rotation la portion entraînable 25" de la roue libre débrayable 25. Ainsi, à l'issue de la phase transitoire de la phase de fonctionnement stabilisée, l'arbre de sortie 2 met en mouvement l'arbre d'entraînement 4 via successivement la première roue dentée 13, la troisième roue dentée 23, le premier arbre secondaire 21, la roue libre débrayable 25, le deuxième arbre secondaire 22 et la quatrième roue dentée 23.

Enfin, on note que le procédé selon l'invention est réversible. Ainsi, afin d'éteindre le moteur, il est possible de réaliser les manoeuvres décrites précédemment en sens inverse.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Installation motrice (8) munie d'un arbre d'entraînement (4) et d'au moins un moteur (1) comportant un arbre de sortie (2) obligatoirement mis en rotation lors du démarrage dudit moteur (1), ledit arbre d'entraînement (4) étant apte à mettre en mouvement un système mécanique (7), **caractérisée en ce que** ledit moteur (1) est un turbomoteur à turbine liée ou un moteur à pistons, et **en ce qu'**elle comporte un organe de liaison (3) pourvu d'un embrayage (15) et d'une roue libre débrayable (25) pour lier mécaniquement ledit arbre de sortie (2) audit arbre d'entraînement (4), ladite roue libre débrayable (25) fonctionnant soit selon un mode déconnecté durant lequel une portion entraînante (25') de la roue libre débrayable (25) ne peut en aucun cas mettre en mouvement une portion entraînable (25") de cette roue libre débrayable (25), soit selon un mode roue libre durant lequel la portion entraînante (25') met en rotation la portion entraînable (25") dès qu'une première vitesse de rotation de la portion entraînante (25') devient supérieure à une deuxième vitesse de rotation de la portion entraînable (25") alors qu'à contrario la portion entraînante n'est pas apte à mettre en rotation ladite portion entraînable lorsque la première vitesse de rotation est inférieure à la deuxième vitesse de rotation.

2. Installation motrice selon la revendication 1, **caractérisée en ce que** la roue libre débrayable (25)

comporte une portion entraînante (25'), une portion entraînable (25"), et une pluralité de galets (25''') disposés dans une cage afin de pouvoir être déplacés longitudinalement.

3. Installation motrice selon l'une quelconque des revendications précédentes,
**caractérisée en ce que**, ledit organe de liaison (3) est apte à lier mécaniquement ledit arbre de sortie (2) audit arbre d'entraînement (4) soit par ledit embrayage (15), soit par ladite roue libre débrayable (25).

4. Installation motrice selon l'une quelconque des revendications précédentes,
**caractérisée en ce que** ledit organe de liaison (3) comporte :

- un premier et un deuxième arbres primaires (11, 12) solidarisés audit embrayage (15), ledit premier arbre primaire (11) étant muni d'une première roue dentée primaire (13) pourvue d'un premier nombre de dents (P1) et ledit deuxième arbre primaire (12) étant muni d'une deuxième roue dentée primaire (14) pourvue d'un deuxième nombre de dents (P2),
- un premier et un deuxième arbres secondaires (21, 22) solidarisés à ladite roue libre débrayable (25), ledit premier arbre secondaire (21) étant muni d'une première roue dentée secondaire (23) pourvue d'un troisième nombre de dents (R1) en prise avec ladite première roue dentée primaire (13), ledit deuxième arbre secondaire (22) étant muni d'une deuxième roue dentée secondaire (24) pourvue d'un quatrième nombre de dents (R2) en prise avec ladite deuxième roue dentée primaire (14).

5. Installation motrice selon la revendication 4,
**caractérisée en ce que** lesdits premier et deuxième arbres primaires (11, 12) étant disposés sur un même premier axe de rotation (AX1), lesdits premier et deuxième arbres secondaires (21, 22) étant disposés sur un même deuxième axe de rotation (AX2), lesdits premier et deuxième arbres primaires (11, 12) sont parallèles auxdits premier et deuxième arbres secondaires (21, 22).

6. Installation motrice selon l'une quelconque des revendications 4 à 5,
**caractérisée en ce que**, le premier quotient (Q1) du troisième nombre de dents (R1) par le premier nombre de dents (P1) est supérieur à l'unité, le produit de ce premier quotient (Q1) par un deuxième quotient (Q2) du deuxième nombre de dents (P2) par le quatrième nombre de dents (R2) étant aussi supérieur à l'unité.

7. Installation motrice selon l'une quelconque des revendications 4 à 6,
**caractérisée en ce que** ledit arbre de sortie (2) est solidaire en rotation de la première roue dentée primaire (13) ou de la première roue dentée secondaire (23).

8. Installation motrice selon l'une quelconque des revendications 4 à 7,
**caractérisée en ce que** ledit arbre d'entraînement (4) est solidaire en rotation de la deuxième roue dentée primaire (14) ou de la deuxième roue dentée secondaire (24).

9. Installation motrice selon l'une quelconque des revendications précédentes,
**caractérisée en ce qu'**elle comporte au moins un moyen de commande (30) dudit embrayage (15) et de ladite roue libre débrayable (25).

10. Procédé d'entraînement d'un système mécanique (7) via une installation motrice (8) selon l'une quelconque des revendications précédentes munie d'un arbre d'entraînement (4) et d'au moins un moteur (1) comportant un arbre de sortie (2) obligatoirement mis en rotation lors du démarrage dudit moteur (1), ledit moteur (1) étant un turbomoteur à turbine liée ou un moteur à pistons, ledit arbre d'entraînement (4) étant en prise avec ledit système mécanique (7) pour le mettre en mouvement, ladite installation motrice (8) comportant un organe de liaison (3) pourvu d'un embrayage (15) et d'une roue libre débrayable (25) pour lier mécaniquement ledit arbre de sortie (2) audit arbre d'entraînement (4), ladite roue libre débrayable (25) fonctionnant soit selon un mode déconnecté durant lequel une portion entraînante (25') de la roue libre débrayable (25) ne peut en aucun cas mettre en mouvement une portion entraînable (25") de cette roue libre débrayable (25), soit selon un mode roue libre durant lequel la portion entraînante (25') met en rotation la portion entraînable (25") dès qu'une première vitesse de rotation de la portion entraînante (25') devient supérieure à une deuxième vitesse de rotation de la portion entraînable (25") alors qu'à contrario la portion entraînante n'est pas apte à mettre en rotation ladite portion entraînable lorsque la première vitesse de rotation est inférieure à la deuxième vitesse de rotation, au cours duquel,

- durant une phase de démarrage, on débraye ledit embrayage (15) et on débraye ladite roue libre débrayable (25) pour désolidariser ledit arbre de sortie (2) dudit arbre d'entraînement (4),
- durant une phase de fonctionnement intermédiaire, on embraye ledit embrayage (15) et on conserve ladite roue libre débrayable (25) débrayée pour solidariser ledit arbre de sortie (2) audit arbre d'entraînement (4) via ledit embrayage (15) uniquement, et

- durant une phase de fonctionnement stabilisée, on débraye ledit embrayage (15) et on embraye ladite roue libre débrayable (25) pour solidariser ledit arbre de sortie (2) audit arbre d'entraînement (4) via ladite roue libre débrayable (25).

**11.** Procédé selon la revendication 10,
**caractérisé en ce que**, le constructeur ayant défini un régime de ralenti minimal dudit moteur (1), on passe de la phase de démarrage à la phase de fonctionnement intermédiaire lorsque le moteur (1) atteint son régime minimal de ralenti.

**12.** Procédé selon l'une quelconque des revendications 10 à 11,
**caractérisé en ce que**, ledit embrayage (15) étant apte à supporter un couple optimal compris entre un premier couple au ralenti et un deuxième couple maximal développés par ledit moteur (1), on passe de la phase de fonctionnement intermédiaire à la phase de fonctionnement stabilisée lorsque le couple développé par le moteur (1) atteint ledit couple optimal dudit embrayage (15).

**Claims**

**1.** Powerplant (8) provided with a drive shaft (4) and at least one engine (1) including an output shaft (2) necessarily set into rotation during startup of said engine (1), said drive shaft (4) being suitable for setting a mechanical system (7) into motion, **characterised in that** said engine (1) is a turboengine having a linked turbine, or a piston engine,
and **in that** the powerplant includes a link member (3) provided with a clutch (15) and a declutchable freewheel (25) for mechanically linking said output shaft (2) to said drive shaft (4), said declutchable freewheel (25) operating either in a disconnected mode during which a driving portion (25') of the declutchable freewheel (25) can under no circumstances set a drivable portion (25") of said declutchable freewheel (25) into motion, or in a freewheel mode during which the driving portion (25') sets the drivable portion (25") into rotation as soon as a first speed of rotation of the driving portion (25') becomes greater than a second speed of rotation of the drivable portion (25"), whereas in contrast the driving portion is not suitable for setting said drivable portion into rotation when the first speed of rotation is lower than the second speed of rotation.

**2.** Powerplant according to Claim 1,
**characterised in that** the declutchable freewheel (25) includes a driving portion (25'), a drivable portion (25"), and a plurality of rollers (25''') placed in a cage so as to be capable of being moved longitudinally.

**3.** Powerplant according to either one of the preceding claims,
**characterised in that** said link member (3) is suitable for mechanically linking said output shaft (2) to said drive shaft (4) either via said clutch (15) or via said declutchable freewheel (25).

**4.** Powerplant according to any one of the preceding claims,
**characterised in that** said link member (3) includes:

- first and second primary shafts (11, 12) secured to said clutch (15), said first primary shaft (11) being provided with a first primary toothed wheel (13) provided with a first number of teeth (P1), and said second primary shaft (12) being provided with a second primary toothed wheel (14) provided with a second number of teeth (P2); and
- first and second secondary shafts (21, 22) secured to said declutchable freewheel (25), said first secondary shaft (21) being provided with a first secondary toothed wheel (23) provided with a third number of teeth (R1) engaged with said first primary toothed wheel (13), said second secondary shaft (22) being provided with a second secondary toothed wheel (24) provided with a fourth number of teeth (R2) engaged with said second primary toothed wheel (14).

**5.** Powerplant according to Claim 4,
**characterised in that** said first and second primary shafts (11, 12) are located on a first common axis of rotation (AX1), and said first and second secondary shafts (21, 22) are located on a second common axis of rotation (AX2), said first and second primary shafts (11, 12) being parallel to said first and second secondary shafts (21, 22).

**6.** Powerplant according to either one of Claims 4 to 5,
**characterised in that** the first quotient (Q1) of the third number of teeth (R1) by the first number of teeth (P1) is greater than unity, and the product of said first quotient (Q1) by a second quotient (Q2) of the second number of teeth (P2) by the fourth number of teeth (R2) is also greater than unity.

**7.** Powerplant according to any one of Claims 4 to 6,
**characterised in that** said output shaft (2) is integral in rotation with the first primary toothed wheel (13) or with the first secondary toothed wheel (23).

**8.** Powerplant according to any one of Claims 4 to 7,
**characterised in that** said drive shaft (4) is integral in rotation with the second primary toothed wheel (14) or with the second secondary toothed wheel (24).

9. Powerplant according to any one of the preceding claims,
**characterised in that** it includes at least one control means (30) for controlling said clutch (15) and said declutchable freewheel (25).

10. Method for driving a mechanical system (7) via a powerplant (8) according to any one of the preceding claims provided with a drive shaft (4) and at least one engine (1) including an output shaft (2) necessarily set into rotation on starting said engine (1), said engine (1) being a turboengine having a linked turbine, or a piston engine, said drive shaft (4) engaging with said mechanical system (7) to set it into motion, said powerplant (8) including a link member (3) provided with a clutch (15) and with a declutchable freewheel (25) for mechanically linking said output shaft (2) to said drive shaft (4), said declutchable freewheel (25) operating either in a disconnected mode during which a driving portion (25') of the declutchable freewheel (25) can under no circumstances set a drivable portion (25") of said declutchable freewheel (25) into motion, or in a freewheel mode during which the driving portion (25') sets the drivable portion (25") into rotation as soon as a first speed of rotation of the driving portion (25') becomes greater than a second speed of rotation of the drivable portion (25"), whereas in contrast the driving portion is not suitable for setting said drivable portion into rotation when the first speed of rotation is lower than the second speed of rotation, in which method:

- during a startup stage, said clutch (15) is declutched and said declutchable freewheel (25) is declutched so as to disconnect said output shaft (2) from said drive shaft (4);
- during an intermediate stage of operation, said clutch (15) is clutched and said declutchable freewheel (25) is kept declutched so as to connect said output shaft (2) to said drive shaft (4) solely via said clutch (15); and
- during a stabilised stage of operation, said clutch (15) is declutched and said declutchable freewheel (25) is clutched so as to connect said output shaft (2) to said drive shaft (4) via said declutchable freewheel (25).

11. Method according to Claim 10,
**characterised in that** the manufacturer defines a minimum idling speed of said engine (1), and the transition from the startup stage to the intermediate stage of operation takes place when the engine (1) reaches its minimum idling speed.

12. Method according to either one of Claims 10 to 11,

**characterised in that** said clutch (15) is suitable for withstanding an optimum torque lying between an idling first torque and a maximum second torque which are developed by said engine (1), and the transition from the intermediate stage of operation to the stabilised stage of operation takes place when the torque developed by the engine (1) reaches said optimum torque for said clutch (15).

**Patentansprüche**

1. Antriebsanordnung (8) mit einer Antriebswelle (4) und mindestens einem Motor (1) mit einer Ausgangswelle (2), die zwangsweise während des Startens des Motors (1) in Drehbewegung versetzt wird, wobei die Antriebswelle (4) ein mechanisches System (7) in Bewegung versetzen kann,
**dadurch gekennzeichnet, dass** der Motor (1) ein Turbomotor mit angeschlossener Turbine oder ein Kolbenmotor ist, und
**dadurch**, dass die Antriebsanordnung ein Verbindungsorgan (3) mit einer Kupplung (15) und einen auskuppelbaren Freilauf (25) aufweist, um die Ausgangswelle (2) mechanisch mit der Antriebswelle (4) zu verbinden, wobei der Freilauf (25) entweder in einem ausgekuppelten Modus funktioniert, in dem ein antreibender Teil (25') des auskuppelbaren Freilaufs (25) in keinem Fall einen antreibbaren Teil (25") dieses auskuppelbaren Freilaufs (25) in Bewegung setzen kann, oder in einem Freilaufmodus, in dem der antreibende Teil (25') den antreibbaren Teil (25") dreht, sobald eine Drehgeschwindigkeit des antreibenden Teils (25') größer wird als eine zweite Drehgeschwindigkeit des antreibbaren Teils (25"), also umgekehrt der antreibende Teil nicht in der Lage ist, den antreibbaren Teil in eine Drehbewegung zu versetzen, wenn die erste Drehgeschwindigkeit kleiner ist als die zweite Drehgeschwindigkeit.

2. Antriebsanordnung nach Anspruch 1,
**dadurch gekennzeichnet, dass** der auskuppelbare Freilauf (25) einen antreibenden Teil (25'), einen antreibbaren Teil (25") und eine Mehrzahl von Rollen (25''') aufweist, die in einem Käfig angeordnet sind, um längs verschoben werden zu können.

3. Antriebsanordnung nach einem der vorstehenden Ansprüche,
**dadurch gekennzeichnet, dass** das Verbindungsorgan (3) mechanisch die Ausgangswelle (2) mit der Antriebswelle (4) entweder über die Kupplung (15) oder über den auskoppelbaren Freilauf (25) verbinden kann.

4. Antriebsanordnung nach einem der vorstehenden Ansprüche,
**dadurch gekennzeichnet, dass** das Verbindungsorgan (3) aufweist:

- eine erste und eine zweite Hauptwelle (11, 12), die mit der Kupplung (15) fest verbunden sind, wobei die erste Hauptwelle (11) mit einem ersten Hauptzahnrad (13) versehen ist, welches eine erste Anzahl von Zähnen (P1) aufweist, und wobei die zweite Hauptwelle (12) mit einem zweiten Hauptzahnrad (14) versehen ist, welches eine zweite Anzahl von Zähnen (P2) aufweist,
- eine erste und eine zweite sekundäre Welle (21, 22), die mit dem auskoppelbaren Freilauf (25) fest verbunden sind, wobei die erste Sekundärwelle (21) mit einem ersten Sekundärzahnrad (23) versehen ist, mit einer dritten Anzahl von Zähnen (R1), das in Eingriff mit dem ersten Primärzahnrad (13) steht, wobei die zweite Sekundärwelle (22) mit einem zweiten Sekundärzahnrad (24) versehen ist, mit einer vierten Anzahl von Zähnen (R2), das in Eingriff mit dem zweiten Primärzahnrad (14) steht.

5. Antriebsanordnung nach Anspruch 4,
   **dadurch gekennzeichnet, dass** die ersten und zweiten Primärwellen (11, 12) auf ein und derselben ersten Drehachse (AX1) angeordnet sind, und die ersten und zweiten sekundären Wellen (21, 22) auf ein und derselben zweiten Drehachse (AX2) angeordnet sind, wobei die ersten und zweiten Primärwellen (11, 12) parallel zu den ersten und zweiten Sekundärwellen (21, 22) verlaufen.

6. Antriebsanordnung nach einem der Ansprüche 4 oder 5,
   **dadurch gekennzeichnet, dass** der erste Quotient (Q1) der dritten Anzahl von Zähnen (R1) dividiert durch die erste Anzahl von Zähnen (P1) größer als 1 ist, und das Produkt dieses ersten Quotienten (Q1) mit einem zweiten Quotienten (Q2) der zweiten Anzahl von Zähnen (P2) dividiert durch die vierte Anzahl von Zähnen (R2) ebenfalls größer als 1 ist.

7. Antriebsanordnung nach einem der Ansprüche 4 bis 6,
   **dadurch gekennzeichnet, dass** die Ausgangswelle (2) drehfest mit dem ersten Hauptzahnrad (13) oder dem ersten Sekundärzahnrad (23) verbunden ist.

8. Antriebsanordnung nach einem der Ansprüche 4 bis 7,
   **dadurch gekennzeichnet, dass** die Antriebswelle (4) drehfest mit dem zweiten Hauptzahnrad (14) oder mit dem zweiten Sekundärzahnrad (24) verbunden ist.

9. Antriebsanordnung nach einem der vorstehenden Ansprüche,
   **dadurch gekennzeichnet, dass** sie mindestens ein Steuermittel (30) für die Kupplung (15) und für den auskoppelbaren Freilauf (25) aufweist.

10. Verfahren zum Antrieb eines mechanischen Systems (7) mit einer Antriebsanordnung (8) nach einem der vorstehenden Ansprüche, die mit einer Antriebswelle (4) und mindestens einem Motor (1) versehen ist, der eine Ausgangswelle (2) aufweist, die zwangsweise während des Startens des Motors (1) in eine Drehbewegung versetzt wird, wobei der Motor (1) ein mit einer Turbine verbundener Turbomotor oder ein Kolbenmotor ist, und die Antriebswelle (4) in Eingriff mit dem mechanischen System (7) steht, um dieses zu bewegen, wobei die Antriebsanordnung (8) ein Verbindungsorgan (3) aufweist, welches mit einer Kupplung (15) und einem auskuppelbaren Freilauf (25) versehen ist, um mechanisch die Ausgangswelle (2) mit der Antriebswelle (4) zu verbinden, wobei der auskuppelbare Freilauf (25) entweder in einem entkoppelten Modus funktioniert, in dem ein antreibender Teil (25') des auskuppelbaren Freilaufs (25) in keinem Fall einen antreibbaren Teil (25") dieses auskuppelbaren Freilaufs (25) bewegen kann, oder in einem Freilaufmodus, in dem der antreibende Teil (25') den antreibbaren Teil (25") dreht, sobald eine erste Drehgeschwindigkeit des antreibenden Teils (25') größer wird als eine zweite Drehgeschwindigkeit des antreibbaren Teils (25"), also umgekehrt der antreibende Teil nicht in der Lage ist, den antreibbaren Teil zu drehen, solange die erste Drehgeschwindigkeit kleiner als die zweite Drehgeschwindigkeit ist, wobei während des Verfahrens:

    - während einer Startphase die Kupplung (15) ausgekoppelt wird und der auskoppelbare Freilauf (25) ausgekoppelt wird, um die Ausgangswelle (2) von der Antriebswelle (4) zu lösen,
    - während einer Zwischenbetriebsphase die Kupplung (15) eingekoppelt wird und der auskoppelbare Freilauf (25) im ausgekuppelten Zustand verbleibt, um die Ausgangswelle (2) lediglich über die Kupplung (15) mit der Antriebswelle (4) zu verbinden, und
    - während einer stabilisierten Betriebsphase die Kupplung (15) ausgekoppelt, der auskoppelbare Freilauf (25) eingekuppelt wird, um die Ausgangswelle (2) mit der Antriebswelle (4) über den auskoppelbaren Freilauf (25) zu verbinden.

11. Verfahren nach Anspruch 10,
    **dadurch gekennzeichnet, dass**, wenn der Konstrukteur einen verlangsamten Minimalbetriebsbereich des Motors (1) definiert hat, von der Startphase zur Zwischenbetriebsphase gewechselt wird, wenn der Motor (1) seinen verlangsamten minimalen Betriebsbereich erreicht hat.

**12.** Verfahren nach einem der Ansprüche 10 oder 11, **dadurch gekennzeichnet, dass**, wenn die Kupplung (15) ein optimales Drehmoment zwischen einem ersten Drehmoment bei verlangsamten Betrieb und einem zweiten maximalen, von dem Motor (1) erzeugten Drehmoment aushalten kann, von der Zwischenbetriebsphase zur stabilisierten Betriebsphase übergegangen wird, wenn das von dem Motor (1) erzeugte Drehmoment das optimale Drehmoment für die Kupplung (15) erreicht.

Figure unique

**EP 2 241 783 B1**

**RÉFÉRENCES CITÉES DANS LA DESCRIPTION**

**Documents brevets cités dans la description**

- WO 2007086906 A
- FR 2670553
- GB 2122285 A
- DE 763170
- US 20081081723 A